# EUROPEAN PATENT APPLICATION

(11) **EP 2 365 417 A2**
(43) Date of publication of application: **14.09.2011**
(21) Application number: 11155724.5
(22) Date of filing: 24.02.2011
(51) Int. Cl.: G06F 1/32, G06F 3/041, G06F 3/048

(54) **Electronic device and electronic system**

(30) Priority: 08.03.2010 JP 2010050941
(71) Applicant: Semiconductor Energy Laboratory Co, Ltd., Atsugi-shi, Kanagawa-ken 243-0036 (JP)
(72) Inventor: Tamura, Hikaru, Atsugi-shi, Kanagawa 243-0036 (JP); Kurokawa, Yoshiyuki, Atsugi-shi, Kanagawa 243-0036 (JP); Ikeda, Takayuki, Atsugi-shi, Kanagawa 243-0036 (JP)
(74) Representative: Grünecker, Kinkeldey, Stockmair & Schwanhäusser Anwaltssozietät

(57) **Abstract**

To provide a display device in which a moving-image mode and a still-image mode which consumes less power can be switched on one screen automatically or by operation by a user on one display screen. The display device includes a display panel including a photosensor for detecting touch input by a user; a display control circuit for displaying a keyboard on part of the display screen; and a storage medium storing a program (an application program) for controlling power supplied to a still-image area of the displayed keyboard. The program for controlling power supplied to the still-image area enables power saving.

## Description

### BACKGROUND OF THE INVENTION

### 1. Field of the Invention

The present invention relates to an electronic device having a circuit including a transistor, and also relates to an electronic system. The present invention relates to, for example, an electronic device on which an electro-optical device typified by a liquid crystal display panel is mounted as a component.

### 2. Description of the Related Art

In recent years, display devices such as e-book readers have been actively developed. In particular, a technique in which an image is displayed with the use of a display element having memory properties has been actively developed because the technique greatly contributes to a reduction of power consumption (Patent Document 1).

In addition, a display device provided with a touch sensor has attracted attention. The display device provided with a touch sensor is called a touch panel, a touch screen, or the like (hereinafter the display device is also referred to simply as a touch panel). Further, a display device provided with an optical touch sensor is mounted is disclosed in Patent Document 2.

Patent Document 1: Japanese Published Patent Application No. 2006-267982
Patent Document 2: Japanese Published Patent Application No. 2001-292276

### SUMMARY OF THE INVENTION

An object of the present invention is to provide a novel electronic device which is configured so that a user can input data by directly or indirectly touching a screen of a display device or by casting a shadow with a finger held over the screen without touching it and can use the input data.

Another object of the present invention is to provide a display device in which a moving-image mode and a still-image mode which consumes less power can be switched on one display screen automatically or by an operation by a user.

Another object of the present invention is to provide an electronic system which can be easily operated by a user by hand and can consume low power.

A user inputs data by visually recognizing a keyboard displayed on a screen and touching a corresponding input position of the keyboard on the screen with a finger or the like. Note that still image display is performed in order to display, without limitation to the keyboard, icons or an area where operation keys are displayed.

One embodiment of the present invention disclosed in this specification is a display device. The display device includes a storage medium and a display panel in which a photosensor for detecting touch input performed by a user is included in a pixel portion. The display panel displays a keyboard on part of a display screen of the display panel. The storage medium stores a program (an application program) for controlling power supplied to a still-image area where the keyboard is displayed.

The display device includes a storage medium in which a control program for a touch-input function and for switching display, which is used for controlling power supplied to each of a moving-image display area, a still-image display area, and the like on one screen, is stored.

Supply of an electrical signal to one display area is reduced to display a still image, and a moving image is displayed in another display area. The program for controlling power supplied to the still-image area enables power saving. In order to perform the function, a display control circuit is in a non-operation state during a still-image display period; thus, a problem of unclear display (or a reduction in contrast) occurs. A transistor which includes an oxide semiconductor layer is used in a pixel portion, a display control circuit, or a sensor control circuit, whereby display quality can be maintained even if a non-operation period of the display control circuit is provided after writing of a still image.

For example, the frequency of rewriting of display is kept to the minimum by a program so that a still image is displayed on an area of a screen where operation buttons such as touch-input buttons (or a keyboard) are displayed and a moving image is displayed in another area of the screen.

Further, in the case where a user does not input data by touching the screen for a certain period of time, the display of a keyboard is stopped and a still image is displayed on the entire screen. When the still image is displayed, the frequency of rewriting of display can be kept to the minimum by the program; thus, power can be saved.

Further, when a predetermined touch input is performed while a first picture is displayed on a display screen of a display panel, a second picture including the input data can be displayed on the display screen.

Further, one embodiment of the present invention disclosed in this specification is a display device which is configured so that a user can input data by, without limitation to touching a display screen, casting a shadow with a finger held over the display screen without touching it. The display device includes a display panel which is provided with a pixel portion including a photosensor and to which data is input by detection of a shadow casted on the display screen with a finger held over the screen without touch; a display control circuit for displaying a keyboard on part of the display screen in accordance with the detection by the photosensor; and a storage medium in which a program for controlling power supplied to a still-image area where the keyboard is displayed.

The display panel is not particularly limited as long as it includes a photosensor in the pixel portion. A transmissive liquid crystal display device or a reflective liquid crystal display device can be used.

A novel electronic device can be provided which is configured so that a user can input data by directly or indirectly touching a screen of a display device or by casting a shadow with a finger held over the screen without touching it and power can be saved with the use of the input data.

A display device in which a moving-image mode and a still-image mode which consumes less power can be switched on one display screen automatically or by an operation by a user can be realized.

A transistor which includes an oxide semiconductor layer is used in a pixel portion, a display control circuit, or a sensor control circuit, whereby display quality can be maintained even if a non-operation period of the display control circuit is provided after writing of a still image. The longer a non-operation period of the display control circuit is, the more power can be saved.

### BRIEF DESCRIPTION OF THE DRAWINGS

FIG. 1 is an example of a block diagram illustrating one embodiment of the present invention.
FIG. 2 illustrates an example of a display screen of one embodiment of the present invention.
FIG. 3 illustrates an example of a display screen of one embodiment of the present invention.
FIG. 4 illustrates an example of a display screen of one embodiment of the present invention.
FIG. 5 is an example of a cross-sectional view of a pixel, illustrating one embodiment of the present invention.
FIG. 6 is an example of a plan view illustrating the positional relation between a reflective electrode layer and a black matrix, in one embodiment of the present invention.
FIGS. 7A to 7C are examples of cross-sectional views of a pixel, illustrating one embodiment of the present invention.
FIG. 8 is a schematic view of a liquid crystal display module of one embodiment of the present invention.
FIGS. 9A and 9B are diagrams each showing appearance of an electronic device of one embodiment of the present invention.
FIGS. 10A and 10B are diagrams each showing appearance of an electronic device of one embodiment of the present invention.

### DETAILED DESCRIPTION OF THE INVENTION

Hereinafter, embodiments of the present invention will be described in detail with reference to the accompanying drawings. However, the present invention is not limited to the description below, and it is easily understood by those skilled in the art that modes and details disclosed herein can be modified in various ways. Therefore, the present invention is not construed as being limited to the description of the embodiments.

### (Embodiment 1)

In this embodiment, a process of input operation of a reflective display device taken as an example will be described, in which a user makes a keyboard displayed on a screen of a display panel by directly or indirectly touching the screen or by casting a shadow with a finger held over the screen without touching it so that a keyboard is displayed on the screen, and furthermore the user inputs data by directly or indirectly touching an area where a desired key of the keyboard is displayed or by casting a shadow with a finger held over the area of the screen without touching it.

Note that in the case of a transimissive display device including a backlight, data is input by detection of a bright portion. The bright portion is formed when a user directly or indirectly touches a screen of a display panel or holds a finger over the screen without touch, that is, the bright portion is formed by reflection of the backlight from the finger.

First, a power button or the like of an electronic device including the display panel is pushed so that the electronic device is turned on. The electronic device includes at least a driver circuit for driving the display panel, a detection circuit for driving a photosensor provided in a pixel portion of the display panel, and a storage medium in which a program or a variety of pieces of data is stored.

At the stage where the electronic device is turned on, a menu screen, a TV picture displayed by reception of an image signal, document data stored in the storage medium in advance, or the like is displayed on the screen of the display panel.

In the case where the menu screen which is a still image is displayed or the document data stored in the storage medium is displayed as a still image, a program for recognizing the menu screen or the data as the still image and automatically switching the display mode into a power-saving mode is started, and the display panel is driven so that the frequency of rewriting of display can be kept to the minimum. In addition, in the case where both a moving image and a still image are displayed on one screen at a time, the screen is divided into a moving-image display area and a still-image display area, a program for automatically switching the mode of only the still-image display area into a power-saving mode is started, and the display panel is driven so that the frequency of rewriting of display in the still-image display area can be kept to the minimum.

When the screen is on, the detection circuit for driving the photosensor checks at a regular interval whether or not predetermined touch input is performed.

When a user touches the screen with a finger, indirectly touches the screen, or casts a shadow on the screen with a finger held over the screen without touching it in order to input data, the detection circuit for driving the photosensor detects the position of the finger on or over the screen.

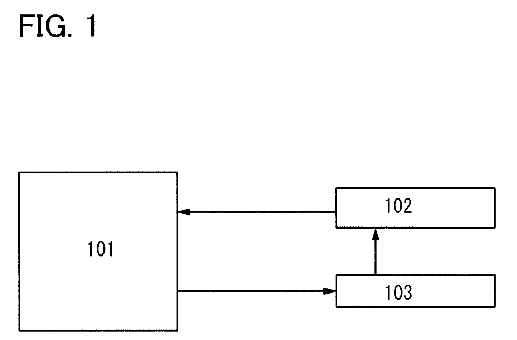

A structure in which an operation is controlled will be described below with reference to a block diagram of FIG. 1 which illustrates a schematic structure of a display device.

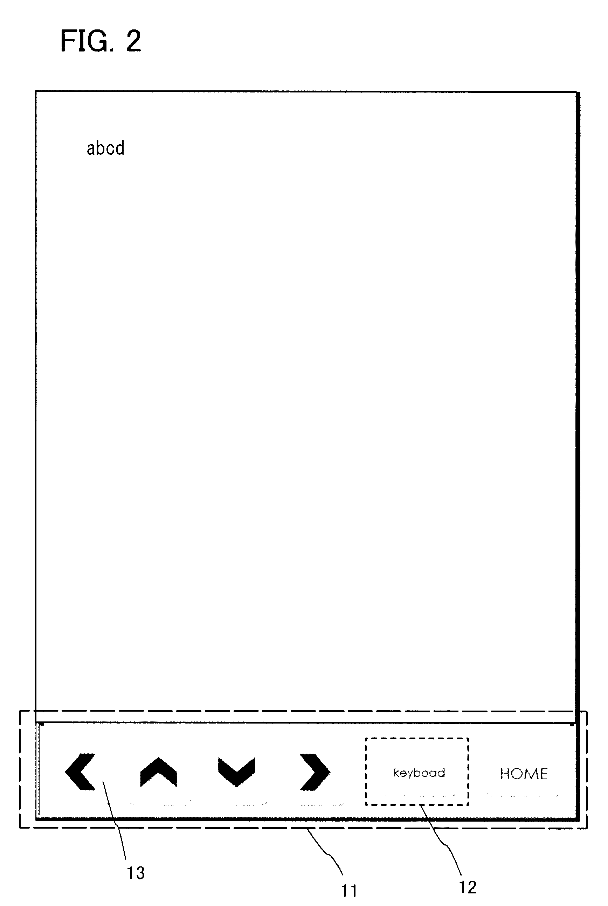

Data input into the display panel 101 by touch is compared to data on the start of keyboard display to be transmitted to a display control circuit 102 by an application program 103 stored in a storage medium. Then, a keyboard is displayed on part of a screen on the basis of the data on the start of keyboard display. FIG. 2 illustrates an example of a display screen of the display panel at this stage.

In FIG. 2, a group of operation buttons 11 including a keyboard button 12 and screen scroll buttons 13 are displayed on part of the screen.

Note that the group of operation buttons 11 is displayed as a still image; thus, a program for recognizing the still image and automatically switching the mode into a power-saving mode is started. Accordingly, the frequency of rewriting of display can be kept to the minimum.

For example, a program for displaying the group of operation buttons 11 has a value of a display area of the group of operation buttons 11, and thus brings the display control circuit into a non-operation period by using the value. In an area where the result of button operation is reflected, the display control circuit is operated to periodically rewrite display. The non-operation period of the display control circuit is provided in the area where the operation buttons are displayed, whereby the area is in a power-saving mode.

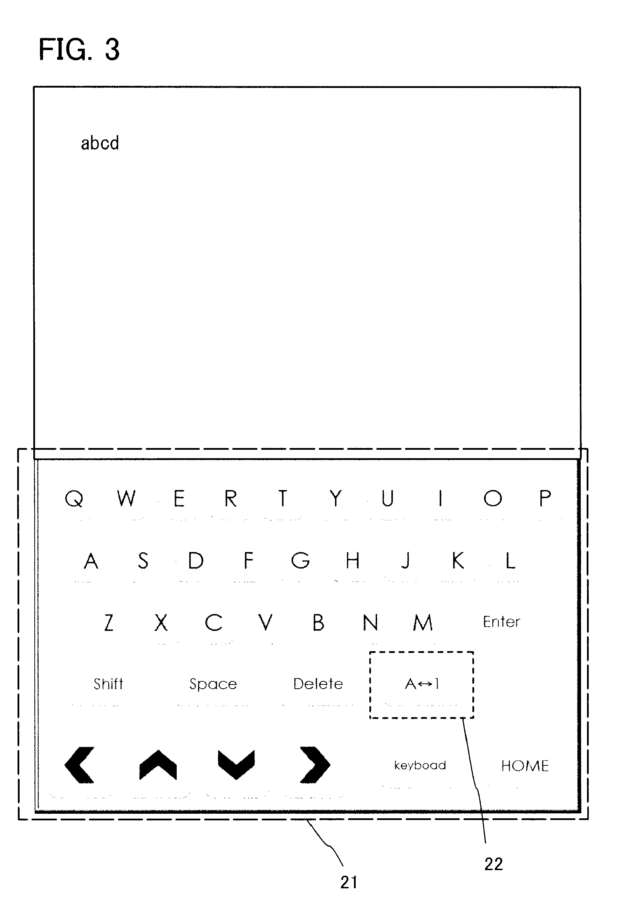

Furthermore, before a certain period of time passes, as a second touch-input operation, the user touches the keyboard button 12 with a finger, indirectly touches the keyboard button 12, or casts a shadow on the screen by holding a finger over the screen without touching it, whereby the display can be switched to keyboard display illustrated in FIG. 3.

In FIG. 3, a group of operation buttons 21 including keyboard buttons of alphabetical letters and the like and a numerical keypad switch button 22 in addition to the screen scroll buttons are displayed on part of the screen. Needless to say, when the user touches the keyboard buttons of alphabetical letters and the like, alphabetical letters and the like which are input data can be displayed on another part of the screen.

Note that the group of operation buttons 21 is displayed as a still image; thus, a program for recognizing the still image and automatically switching the mode into a power-saving mode is started. Accordingly, the frequency of rewriting of display can be kept to the minimum.

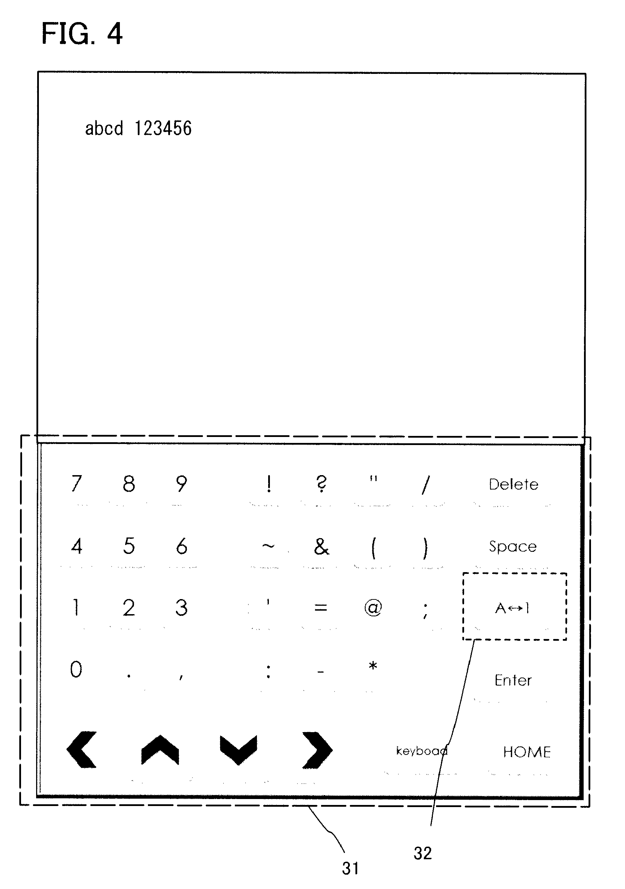

Furthermore, before a certain period of time passes, as a third touch-input operation, the user touches the numerical keypad switch button 22 with a finger, indirectly touches the numerical keypad switch button 22, or casts a shadow on the screen by holding a finger over the screen without touching it, whereby the keyboard display can be switched to display illustrated in FIG. 4.

In FIG. 4, a group of operation buttons 31 including keyboard buttons of numbers, symbols, and the like and an alphabetical letter switch button 32 in addition to the screen scroll buttons are displayed on part of the screen. Needless to say, when a user touches the keyboard buttons of numbers, symbols, and the like, numbers and symbols which are input data can be displayed on another part of the screen.

Note that the group of operation buttons 31 is displayed as a still image; thus, a program for recognizing the still image and automatically switching the mode into a power-saving mode is started. Accordingly, the frequency of rewriting of display can be kept to the minimum.

Further, in the case where a user does not input data by touching the screen for a certain period of time, the display of a keyboard is stopped and a still image is displayed on the entire screen. When the still image is displayed, the frequency of rewriting of display can be kept to the minimum by the program; thus, power can be saved.

As described above, a display device in which a moving-image mode and a still-image mode which consumes less power can be switched on one display screen automatically or by an operation by a user can be realized.

Further, when a user performs touch input, the user can slide the display itself by sliding a finger across the screen. In addition, multi-touch input with two or more fingers without limitation to one finger is also possible. For example, when the user brings two fingers close to each other on the screen, an instruction to zoom out a displayed picture can be given to the electronic device. In addition, when the user brings two fingers away from each other on the screen, an instruction to enlarge a displayed picture can be given to the electronic device.

### (Embodiment 2)

As a liquid crystal panel, a transmissive liquid crystal panel in which a photosensor is included in a pixel portion, a reflective liquid crystal panel in which a photosensor is included in a pixel portion, or the like can be used.

An example of a pixel structure of a reflective liquid crystal panel in which a photosensor is included in a pixel portion will be described below.

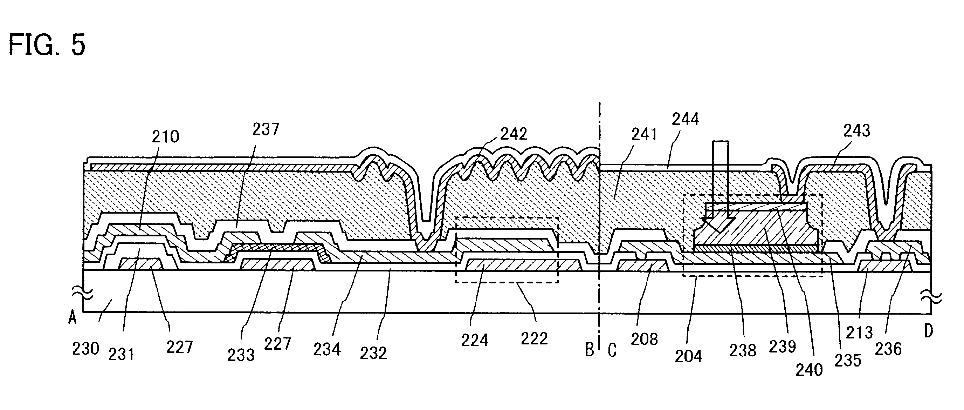

FIG. 5 illustrates a cross-sectional structure of an active matrix substrate in which a photosensor and a transistor are formed over the same substrate.

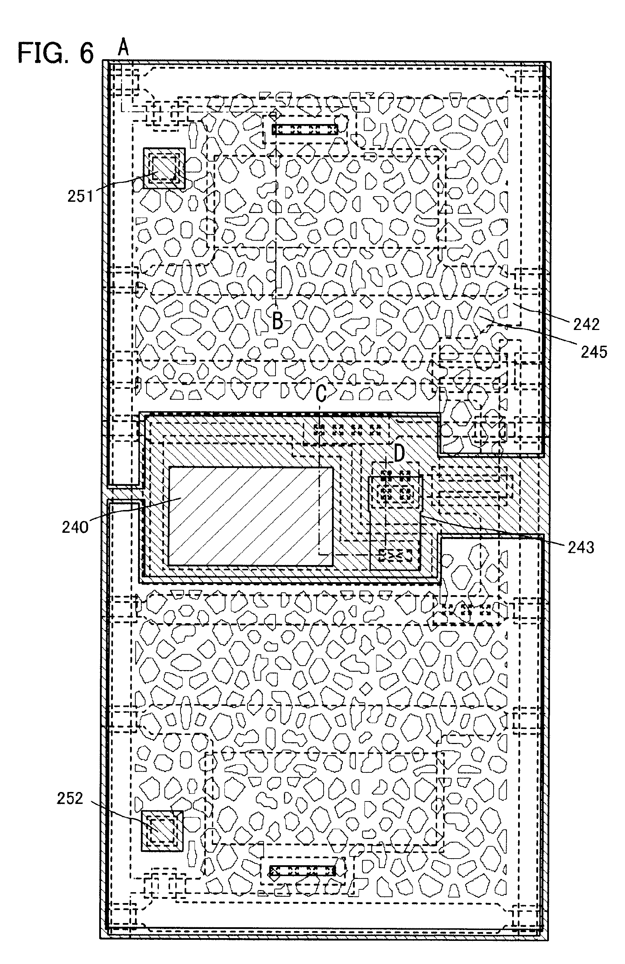

FIG. 6 is a top view. A cross-sectional view taken along a chain line A-B in FIG. 6 and a cross-sectional view taken along a chain line C-D in FIG. 6 correspond to FIG. 5.

First, a conductive film is formed over a substrate 230. Then, gate signal lines 213 and 227, a capacitor wiring 224, a photodiode reset signal line 208, a reading signal line, and a photosensor reference signal line are formed through a first photolithography step using a first light-exposure mask. In this embodiment, a glass substrate is used as the substrate 230.

An insulating film which serves as a base film may be provided between the substrate 230 and the conductive film. The base film has a function of preventing diffusion of impurity elements from the substrate 230. The base film can be formed to have a single-layer structure or a stacked-layer structure including one or more of a silicon nitride film, a silicon oxide film, a silicon nitride oxide film, and a silicon oxynitride film.

The conductive film can be formed to have a single-layer structure or a stacked-layer structure including a metal material such as molybdenum, titanium, tantalum, tungsten, aluminum, copper, neodymium, or scandium, or an alloy material which contains any of these metal materials as its main component.

Next, an insulating layer for covering these wirings is formed, and selective etching is performed through a second photolithography step using a second light-exposure mask so that an insulating layer 231 remains only in a portion which intersects with a wiring which is formed later. In this embodiment, a silicon oxynitride film with a thickness of 600 nm is used as the insulating layer 231.

Then, a gate insulating layer 232 and an oxide semiconductor film are formed, and a first oxide semiconductor layer 233, a second oxide semiconductor layer, a third oxide semiconductor layer, and a fourth oxide semiconductor layer are formed through a third photolithography step using a third light-exposure mask. The first oxide semiconductor layer 233, the second oxide semiconductor layer, the third oxide semiconductor layer, and the fourth oxide semiconductor layer overlap with the gate signal line 227 and the reading signal line with the gate insulating layer 232 interposed therebetween. In this embodiment, a silicon oxynitride film with a thickness of 100 nm is used as the gate insulating layer 232, and an In-Ga-Zn-O film with a thickness of 30 nm is used as the oxide semiconductor film.

An oxide thin film represented by a chemical formula of In*M*O₃(ZnO)*ₘ*, (*m*>0) can be used for the first oxide semiconductor layer 233, the second oxide semiconductor layer, the third oxide semiconductor layer, and the fourth oxide semiconductor layer. Here, M represents one or more metal elements selected from Ga, Al, Mn, and Co. For example, M can be Ga, Ga and Al, Ga and Mn, Ga and Co, or the like. Further, SiO₂ may be contained in the above oxide thin film.

As the target for forming the oxide thin film by a sputtering method, for example, an oxide target having a composition ratio of In₂O₃:Ga₂O₃:ZnO = 1:1:1 [molar ratio] is used to form an In-Ga-Zn-O film. Without limitation to the material and the component of the target, for example, an oxide target having a composition ratio of In₂O₃:Ga₂O₃:ZnO = 1:1:2 [molar ratio] may be used. Note that in this specification, for example, an In-Ga-Zn-O film means an oxide film containing indium (In), gallium (Ga), and zinc (Zn), and there is no particular limitation on the stoichiometric proportion.

Next, the oxide semiconductor layers are subjected to first heat treatment. The oxide semiconductor layers can be dehydrated or dehydrogenated by the first heat treatment. The temperature of the first heat treatment is higher than or equal to 400 °C and lower than or equal to 750 °C, or higher than or equal to 400 °C and lower than the strain point of the substrate. In this embodiment, heat treatment is performed with a rapid thermal anneal (RTA) apparatus at 650 °C in a nitrogen atmosphere for six minutes; the substrate is introduced into an electric furnace that is a kind of heat treatment apparatus without being exposed to the air; the oxide semiconductor layers are subjected to heat treatment at 450 °C in a nitrogen atmosphere for one hour; and water or hydrogen is prevented from entering the oxide semiconductor layers; thus, the oxide semiconductor layers can be obtained.

Next, the gate insulating layer 232 is selectively removed through a fourth photolithography step using a fourth light-exposure mask, whereby an opening reaching the gate signal line 213 and an opening reaching the photodiode reset signal line 208 are formed.

Next, a conductive film is formed over the gate insulating layer 232 and the oxide semiconductor layers. The conductive film can be formed of a metal film containing an element selected from Al, Cr, Cu, Ta, Ti, Mo, and W as its component, an alloy film containing a nitride of any of these elements as its component, an alloy film containing a combination of any of these elements, or the like. In this embodiment, the conductive film has a three-layer structure in which a Ti film with a thickness of 100 nm, an Al film with a thickness of 400 nm, and a Ti film with a thickness of 100 nm are stacked. Then, a resist mask is formed over the conductive film through a fifth photolithography step using a fifth light-exposure mask and selective etching is performed, whereby a video data signal line 210, a photosensor output signal line, and electrode layers 234, 235, and 236 are formed.

Note that as illustrated in FIG. 5, a transistor which includes the first oxide semiconductor layer 233 and the electrode layer 234 which serves as a source electrode layer or a drain electrode layer is manufactured. Further, as illustrated in FIG. 5, the electrode layer 234, the gate insulating layer 232 serving as a dielectric, and the capacitor wiring 224 form a storage capacitor 222.

Next, second heat treatment (preferably at higher than or equal to 200 °C and lower than or equal to 400 °C, for example, higher than or equal to 250 °C and lower than or equal to 350 °C) is performed in an inert gas atmosphere or an oxygen gas atmosphere. In this embodiment, the second heat treatment is performed at 300 °C in a nitrogen atmosphere for one hour. Through the second heat treatment, part of the oxide semiconductor layer (a channel formation region) is heated while being in contact with the insulating layer.

Next, an insulating layer 237 which serves as a protective insulating layer is formed, and a sixth photolithography step using a sixth light-exposure mask is performed, whereby an opening reaching the electrode layer 235, an opening reaching the electrode layer 234, and an opening reaching the electrode layer 236 are formed. In this embodiment, as the insulating layer 237, a silicon oxide film with a thickness of 300 nm formed by a sputtering method is used.

Next, a p layer 238, an i layer 239, and an n layer 240 are stacked by a plasma CVD method. In this embodiment, a 60 nm thick microcrystalline silicon film containing boron is used as the p layer 238, a 400 nm thick amorphous silicon film is used as the i layer 239, and an 80 nm thick microcrystalline silicon film containing phosphorus is used as the n layer 240. Then, the p layer 238, the i layer 239, and the n layer 240 are selectively etched through a seventh photolithography step using a seventh light-exposure mask, and after that part of the n layer 240 and part of the i layer 239 are selectively removed.

Next, a photosensitive organic resin layer is formed, an eighth photolithography step is performed through which a region to be an opening is exposed to light using an eighth light-exposure mask, and a region to be uneven is exposed to light using a ninth light-exposure mask and developed, whereby an insulating layer 241 which is partly uneven is formed. In this embodiment, an acrylic resin with a thickness of 1.5 µm is used for the photosensitive organic resin layer.

Next, a reflective conductive film is deposited and a ninth photolithography step using a tenth light-exposure mask is performed, whereby a reflective electrode layer 242 and a connection electrode layer 243 are formed. For the reflective conductive film, Al, Ag, or an alloy thereof such as aluminum containing Nd or an Ag-Pd-Cu alloy is used. In this embodiment, the reflective conductive film is a stacked layer of a 100 nm thick Ti film and a 300 nm thick Al film over the Ti film. After the ninth photolithography step, third heat treatment is performed. In this embodiment, the third heat treatment is performed at 250 °C in a nitrogen atmosphere for one hour.

Through the above steps, a transistor electrically connected to the reflective electrode layer 242 and a photodiode electrically connected to the gate signal line 213 through the connection electrode layer 243 can be formed over one substrate through the nine photolithography steps with the use of the ten light-exposure masks in total.

This embodiment can be freely combined with Embodiment 1.

### (Embodiment 3)

In this embodiment, an example of a liquid crystal display module in which a color filter is provided and which is capable of full-color display will be described.

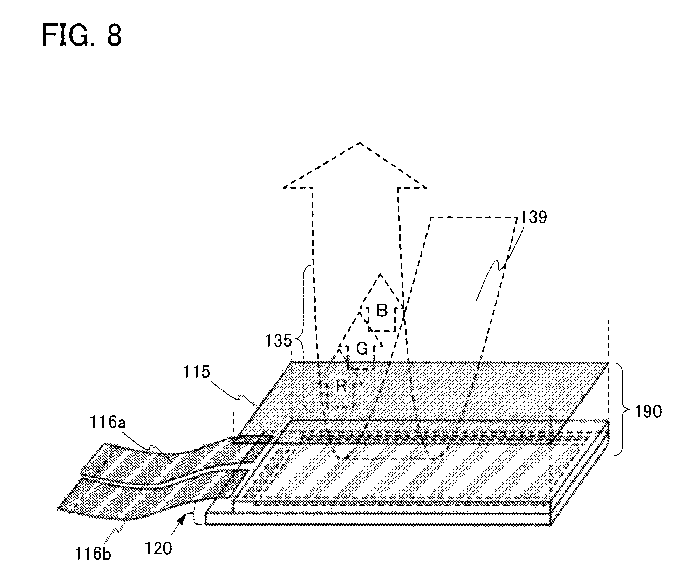

FIG. 8 illustrates a structure of a liquid crystal display module 190. The liquid crystal display module 190 includes a display panel 120 in which liquid crystal elements are arranged in matrix, and a polarizing plate and a color filter 115 which overlap with the display panel 120. In addition, flexible printed circuits (FPCs) 116a and 116b which serve as external input terminals are electrically connected to a terminal portion provided in the display panel 120. The display panel 120 has the same structure as the display panel 101 described in Embodiment 1. Note that since the liquid crystal display module 190 performs full-color display, the display panel 120 uses three display elements of a red display element, a green display element, and a blue display element and has a circuit configuration in which different video signals are supplied to the three display elements.

Further, FIG. 8 schematically illustrates a state in which external light 139 is transmitted through the liquid crystal elements in the display panel 120 and reflected at a reflective electrode. For example, in a pixel overlapping with a red region of the color filter, the external light 139 is transmitted through the color filter 115 and then passes through the liquid crystal layer, reflected at the reflective electrode, and transmitted again through the color filter 115 to be extracted as red light. In FIG. 8, three colors of light 135 are schematically denoted by arrows (R, G, and B). The intensity of the light which is transmitted through the liquid crystal elements is modulated by an image signal; thus, a viewer can perceive an image by reflected light of the external light 139.

In addition, the display panel 120 includes a plurality of photosensors in a pixel portion and has a touch-input function. When light-receiving regions of the photosensors also overlap with the color filter, the photosensors can function as visible-light sensors. Further, in order to take in a large amount of incident light for improvement in the optical sensitivity of the photosensor, an opening may be provided in the color filter in a region overlapping with the light-receiving region of the photosensor so that the light-receiving region of the photosensor and the color filter do not overlap with each other.

This embodiment can be freely combined with any of Embodiments 1 and 2.

### (Embodiment 4)

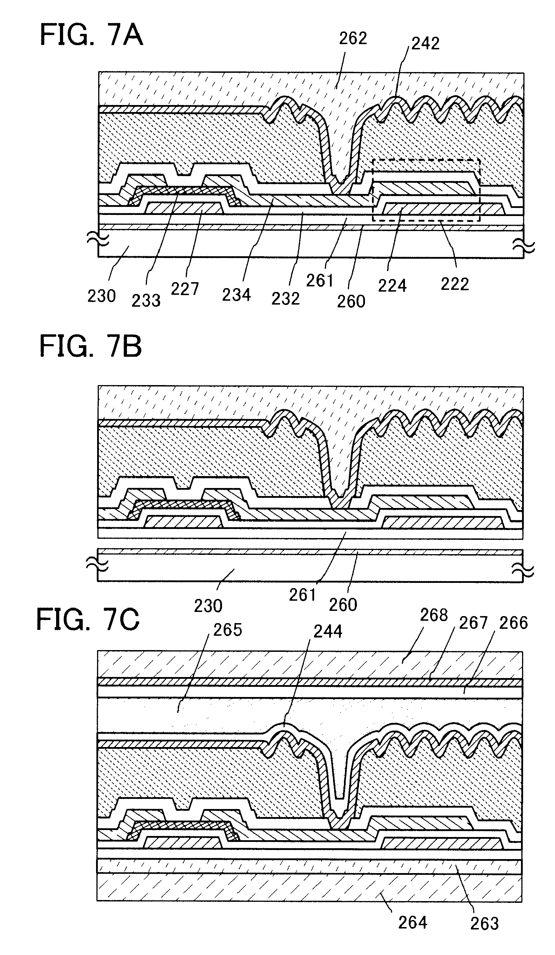

In this embodiment, an example in which a transistor and a photosensor are formed over a glass substrate, and then the transistor and the photosensor are mounted on a flexible substrate. Note that, in this embodiment, FIGS. 7A to 7C are cross-sectional process views of the transistor, detailed description on steps and structures of a photodiode and the like, which are the same as those in Embodiment 2, are omitted, and components which are the same as those in FIG. 5 are denoted by the same reference numerals.

First, a separation layer 260 is formed over the substrate 230 by a sputtering method, and an oxide insulating film 261 which functions as a base film is formed over the separation layer 260. Note that a glass substrate, a quartz substrate, or the like is used as the substrate 230. The oxide insulating film 261 is formed using a material such as silicon oxide, silicon oxynitride (SiO*ₓ*N*_{y}*) (*x*>*y*>0), or silicon nitride oxide (SiN*ₓ*O*_{y}*) (*x*>*y*>0) by a PCVD method, a sputtering method, or the like.

A metal film, a stacked layer of a metal film and a metal oxide film, or the like can be used as the separation layer 260. The metal film is formed to have a single-layer structure or a stacked-layer structure of a film of an element selected from tungsten (W), molybdenum (Mo), titanium (Ti), tantalum (Ta), niobium (Nb), nickel (Ni), cobalt (Co), zirconium (Zr), zinc (Zn), ruthenium (Ru), rhodium(Rh), palladium (Pd), osmium (Os), and iridium (Ir), or an alloy material or a compound material which contains any of these elements as its main component. For example, when a tungsten film is provided as a metal film by a sputtering method, a CVD method, or the like, a metal oxide film of tungsten oxide can be formed on the surface of the tungsten film by performing plasma treatment on the tungsten film. In addition, for example, after a metal film (e.g., tungsten) is formed, an insulating film formed of silicon oxide or the like may be formed over the metal film by a sputtering method, and also metal oxide (e.g., tungsten oxide over tungsten) may be formed over the metal film. Moreover, as the plasma treatment, for example, high-density plasma treatment may be performed with a high-density plasma apparatus. Besides the metal oxide film, a metal nitride film or a metal oxynitride film may be used. In this case, plasma treatment or heat treatment may be performed on the metal film in a nitrogen atmosphere or an atmosphere of nitrogen and oxygen.

Next, a conductive film is formed over the oxide insulating film 261. After that, in a manner similar to that of Embodiment 2, the gate signal line 227, the capacitor wiring 224, the photodiode reset signal line, the reading signal line, and the photosensor reference signal line are formed through a first photolithography step using a first light-exposure mask.

Subsequent steps are performed in accordance with Embodiment 2 to form the transistor and the reflective electrode layer 242. Then, the reflective electrode layer 242 is covered with a water-soluble resin layer 262. FIG. 7A is a cross-sectional view illustrating a state at this stage. Note that in FIG. 7A, a cross-sectional structure of the vicinity of the reflective electrode layer 242 is illustrated and a photodiode formed over the same substrate is not illustrated for simplification.

Next, the water-soluble resin layer 262 is fixed to a support substrate or the like. After that, laser light irradiation or the like is performed on the separation layer to form an opening, and a layer including the transistor is separated from the substrate 230. FIG. 7B is a cross-sectional view illustrating a state at this stage. As illustrated in FIG. 7B, the separation is performed at an interface between the oxide insulating film 261 and the separation layer 260 formed over the substrate 230.

Next, as illustrated in FIG. 7C, a flexible substrate 264 is attached to a surface of the layer including the transistor, which is exposed due to the separation, with an adhesive layer 263. A plastic film can be used as the flexible substrate 264. In addition, a thin stainless steel substrate can be used as the flexible substrate 264 because a reflective liquid crystal display device is employed in this embodiment.

Next, the water-soluble resin layer 262 is removed. After that, an alignment film 244 is formed. Then, a counter substrate 268 provided with a counter electrode 267 is attached to the flexible substrate 264 with a sealant. Note that the counter substrate 268 is also provided with an alignment film 266 for covering the counter electrode 267 before being attached to the flexible substrate 264. In the case where a liquid crystal dropping method is used, liquid crystal is dropped in a region surrounded by a closed-loop sealant, and a pair of substrates is attached under reduced pressure. In such a manner, a liquid crystal layer 265 fills a region surrounded by the pair of substrates and the sealant.

There is no particular limitation on the liquid crystal layer 265, and a known liquid crystal material (typically, a nematic liquid crystal material or a cholesteric liquid crystal material) may be used. In particular, when polymer dispersed liquid crystals (PDLCs) or polymer network liquid crystals (PNLCs) are used in the liquid crystal layer, light scatters by the liquid crystals. With the use of such scattered light, white display (bright display) may be performed. When PDLCs or PNLCs are used in the liquid crystal layer, a polarizing plate is not needed and display close to paper can be realized. Thus, an eye-friendly liquid crystal display device which causes less eye strain can be manufactured.

When a plastic film which has high light-transmitting properties and causes less retardation is used as the counter substrate 268, a flexible liquid crystal panel can be manufactured.

Further, the above-described manufacturing process of the flexible liquid crystal panel is just an example. For example, a flexible liquid crystal panel may be manufactured in such a manner that glass substrates used as the substrate 230 and the counter substrate 268 may be processed to be thin by polishing or the like after the transistor is manufactured. In that case, the substrate 230 and the counter substrate 268 are both polished after the liquid crystal layer is formed therebetween.

An example of the liquid crystal panel in which the counter substrate is provided with the counter electrode and an electric field is applied to the liquid crystal layer between the counter electrode and the reflective electrode layer provided for the substrate where the transistor is formed is described in this embodiment. However, a transmissive liquid crystal panel with a lateral electric field method (also referred to as IPS), in which a pixel electrode layer and a common electrode layer are both provided for a substrate where a transistor is formed, and an electric field is applied to a liquid crystal layer in a direction parallel to the main surface of the substrate, may be manufactured.

Alternatively, a blue phase liquid crystal without an alignment film may be used to form a transmissive liquid crystal panel. A blue phase is one of liquid crystal phases, which is generated just before a cholesteric phase changes into an isotropic phase while temperature of cholesteric liquid crystal is increased. Since the blue phase appears only in a narrow temperature range, a liquid crystal composition containing a chiral agent at 5 wt% or more is used for the liquid crystal layer in order to widen the temperature range. The liquid crystal composition containing a liquid crystal exhibiting a blue phase and a chiral agent has a short response time of 1 msec or less and has optical isotropy, which makes the alignment process unneeded, and has a small viewing angle dependence.

Further, the present invention can be applied to a transmissive liquid crystal panel in which an optical compensate birefringence (OCB) mode is employed. In the OCB mode, the response speed of a liquid crystal layer is improved in such a manner that the liquid crystal layer between a pair of substrates is brought into a bend alignment state. A pretilt angle of a first alignment film in contact with the liquid crystal layer and a pretilt angle of a second alignment film in contact with the liquid crystal layer are controlled, whereby the bend alignment is made. In the OCB mode, the liquid crystal layer needs to be brought into the bend alignment state from a splay alignment that is an initial state.

Further, the present invention can be applied to a transmissive liquid crystal panel in which a vertical alignment mode is employed. In the transmissive liquid crystal panel in which the vertical alignment mode is employed, a driving method for achieving a wide viewing angle may be performed in such a manner that one pixel is divided into a plurality of subpixels, and parts of a counter substrate each of which corresponds to the center of each pixel are provided with a projection portion to perform alignment division (multi-domain) of one pixel. This driving method is referred to as sub-pixel driving.

Further, a liquid crystal panel in which a nematic liquid crystal material having negative dielectric anisotropy is used as a liquid crystal material and a vertical alignment film is used as an alignment film may be formed. This method in which the vertical alignment film is used is one of voltage control birefringence (also referred to as ECB) methods, and transmittance is controlled utilizing birefringence of liquid crystal molecules.

This embodiment can be freely combined with any of Embodiments 1 to 3.

### (Embodiment 5)

In this embodiment, examples of electronic devices each of which includes the liquid crystal display device described in any of Embodiments 1 to 4 will be described.

The liquid crystal display device manufactured through the process described in any of Embodiments 2 to 4 can be applied to a variety of electronic devices (including game machines). Examples of electronic devices are a television device (also referred to as a television or a television receiver), a monitor of a computer or the like, a camera such as a digital camera or a digital video camera, a digital photo frame, a mobile phone handset (also referred to as a mobile phone or a mobile phone device), a portable game console, a portable information terminal, an audio reproducing device, a large-size game machine such as a pachinko machine, and the like.

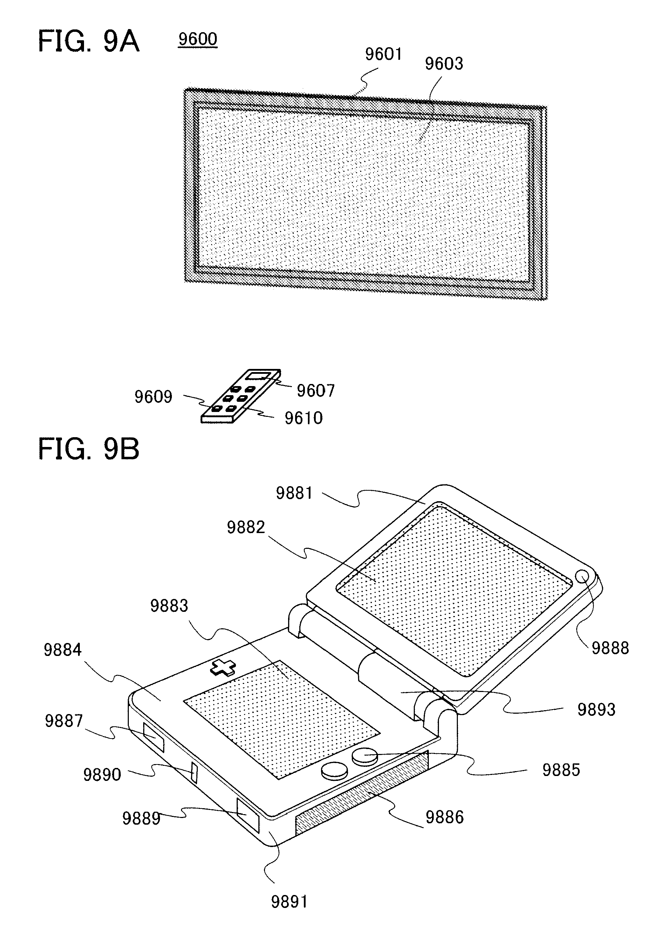

FIG. 9A illustrates an example of a television device. In a television device 9601, a display panel 9603 is incorporated in a housing. The display panel 9603 can display images. In FIG. 9A, the television device 9601 is fixed to a wall 9600 and is supported at the back of the housing.

In the television device 9601, as described in Embodiment 1, images displayed on the display panel 9603 can be controlled by touch input with the use of a photosensor provided in a pixel portion of the display panel. In addition, a keyboard can be displayed on the display panel 9603 to input data.

In addition, the television device 9601 can be operated with an operation switch of the housing or a separate remote controller 9610. Channels can be switched and volume can be controlled with operation keys 9609 of the remote controller 9610, whereby an image displayed on the display panel 9603 can be controlled. Further, the remote controller 9610 may be provided with a display panel 9607 for displaying data output from the remote controller 9610.

Note that the television device 9601 is provided with a receiver, a modem, and the like. With the use of the receiver, general television broadcasting can be received. Moreover, when the display device is connected to a communication network with or without wires via the modem, one-way (from a sender to a receiver) or two-way (between a sender and a receiver, between receivers, or the like) information communication can be performed. The display panel 9603 provided with a touch-input function is suitable for one-way or two-way information communication.

FIG. 9B illustrates a portable game machine including a housing 9881 and a housing 9891, which are jointed with a connector 9893 so that the portable game machine can be opened or folded. A display panel 9882 and a display panel 9883 are incorporated in the housing 9881 and the housing 9891, respectively. The display panel 9882 and the display panel 9883 each include a photosensor in a pixel portion so that they have touch-input functions. The portable game machine illustrated in FIG. 9B additionally includes a speaker portion 9884, a recording medium insertion portion 9886, an LED lamp 9890, an input means (operation keys 9885, a connection terminal 9887, a sensor 9888 (a sensor having a function of measuring force, displacement, position, speed, acceleration, angular speed, the number of rotations, distance, light, sound, tilt angle, vibration, or infrared ray), a microphone 9889), and the like. The portable game machine illustrated in FIG. 9B has a function of reading a program or data stored in a recording medium to display it on the display panel, and a function of sharing information with another portable game machine by wireless communication.

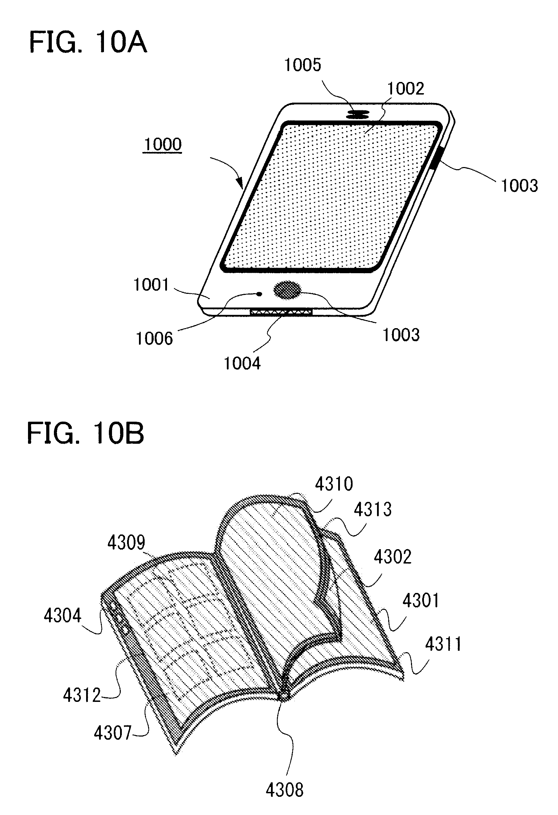

FIG. 10A illustrates an example of a mobile phone. A mobile phone 1000 includes a display panel 1002 incorporated in a housing 1001, operation buttons 1003, an external connection port 1004, a speaker 1005, a microphone 1006, and the like.

As described in Embodiment 1, a user can input data into the mobile phone 1000 illustrated in FIG. 10A by touching the display panel 1002 including a pixel portion having a photosensor with a finger or the like. Further, the user can make a call or text by touching the display panel 1002 with a finger or the like.

When a detection device including a sensor for detecting inclination, such as a gyroscope or an acceleration sensor, is provided inside the mobile phone 1000, the detection device detects the direction of the mobile phone 1000 (whether the mobile phone 1000 is placed horizontally or vertically for a landscape mode or a portrait mode) so that the screens of the display panel 1002 can be automatically switched.

The screen modes are switched by touching the display panel 1002 or operating the operation button 1003 of the housing 1001. Alternatively, the screen modes can be switched depending on the kind of image displayed on the display panel 1002. For example, when a signal of an image displayed on the display panel is a signal of moving image data, the screen mode is switched to the display mode. When the signal is a signal of text data, the screen mode is switched to the input mode.

Further, in the input mode, when input by touching the display panel 1002 is not performed for a certain period of time while a signal detected by the photosensor provided in the pixel portion of the display panel 1002 is detected, the screen mode may be controlled so as to be switched from the input mode to the display mode.

FIG. 10B is a perspective view illustrating an example of an e-book reader. In FIG. 10B, an e-book reader is opened and includes a plurality of display panels: a first display panel 4311, a second display panel 4312, and a double-sided third display panel between the first display panel 4311 and the second display panel 4312.

The e-book reader illustrated in FIG. 10B includes the first display panel 4311 including a display panel 4301; the second display panel 4312 including an operation portion 4304 and a display panel 4307; the third display panel 4313 including a display panel 4302 and a display panel 4310; and a binding portion 4308 provided at ends of the first display panel 4311, the second display panel 4312, and the third display panel 4313. The third display panel 4313 is interposed between the first display panel 4311 and the second display panel 4312. The e-book reader illustrated in FIG. 10B includes four display screens: the display panels 4301, 4307, 4302, and 4310.

The first display panel 4311, the second display panel 4312, and the third display panel 4313 are flexible and thus are easily bent. These panels can be manufactured by the method described in Embodiment 4.

The third display panel 4313 is a double-sided display panel including the display panel 4302 and the display panel 4310. In the third display panel 4313, two liquid crystal display panels between which a backlight (preferably a thin EL light-emitting panel) is interposed are used. At least one of the three display panels may perform full-color display and the other display panels may perform monochrome display.

In the e-book reader illustrated in FIG. 10B, the second display panel 4312 includes the operation portion 4304 which can have switches for various functions, such as a power switch and a switch for changing display.

A user can input data into the e-book reader illustrated in FIG. 10B by touching the display panel 4301 or the display panel 4307 in which a photosensor is provided in a pixel portion with a finger, an input pen, or the like, or by operating the operation portion 4304. Note that in FIG. 10B, display buttons 4309 are displayed on the display panel 4307, and the user can input data by touching the display button with a finger or the like.
This application is based on Japanese Patent Application serial no. 2010-050941 filed with the Japan Patent Office on March 8, 2010, the entire contents of which are hereby incorporated by reference.

## Claims

1. A display device comprising:
a display panel including a photosensor configured to detect touch input performed on a display screen, in a pixel portion;
a display control circuit configured to display an operation button on part of the display screen in accordance with a detection by the photosensor; and
a storage medium configured to store a program for controlling power supplied to a still-image area of the displayed operation button.

2. The display device according to claim 1,
wherein the program divides the display screen into a moving-image display area and a still-image display area, and
wherein display is performed on the still-image display area with less power consumption than on the moving-image display area.

3. The display device according to claim 1, wherein when touch input is performed while a first picture is displayed on the display screen, a second picture is displayed on the display screen.

4. The display device according to claim 1, wherein the display panel is a transmissive liquid crystal display panel.

5. The display device according to claim 1, wherein the display panel is a reflective liquid crystal display panel.

6. The display device according to claim 1, wherein the operation button is a keyboard or an icon.

7. A display device comprising:
a display panel including a photosensor configured to detect a shadow casted on a display screen without touch, in a pixel portion;
a display control circuit configured to display an operation button on part of the display screen in accordance with a detection by the photosensor; and
a storage medium configured to store a program for controlling power supplied to a still-image area of the displayed operation button.

8. The display device according to claim 7,
wherein the program divides the display screen into a moving-image display area and a still-image display area, and
wherein display is performed on the still-image display area with less power consumption than on the moving-image display area.

9. The display device according to claim 7, wherein when the shadow is detected while a first picture is displayed on the display screen, a second picture is displayed on the display screen.

10. The display device according to claim 7, wherein the display panel is a transmissive liquid crystal display panel.

11. The display device according to claim 7, wherein the display panel is a reflective liquid crystal display panel.

12. The display device according to claim 7, wherein the operation button is a keyboard or an icon.

13. The display device according to claim 7, wherein the shadow is casted with a finger held over the screen.
